# EUROPÄISCHE PATENTSCHRIFT

(11) **EP 0 999 105 B1**
(45) Veröffentlichungstag und Bekanntmachung des Hinweises auf die Patenterteilung: **15.09.2004**
(21) Anmeldenummer: 99120589.9
(22) Anmeldetag: 16.10.1999
(51) Int. Cl.: B60S 1/38

(54) **Scheibenwischer mit austauschbarem Wischergummi**
Wiper blade with a replaceable squeegee
Balai d'essuie-glace avec raclette remplaçable

(30) Priorität: 03.11.1998 DE 19850682
(43) Veröffentlichungstag der Anmeldung: 10.05.2000
(73) Patentinhaber: Bayerische Motoren Werke Aktiengesellschaft, 80809 München (DE)
(72) Erfinder: Gaisreiter, Johann, 82444 Schlehdorf (DE)

(56) Entgegenhaltungen:
- DE-A- 4 441 855
- DE-A- 19 522 273
- US-A- 3 421 175
- US-A- 3 823 437

## Beschreibung

Die Erfindung betrifft einen Scheibenwischer mit austauschbarem Wischergummi, mit den im Oberbegriff des unabhängigen Patentanspruches 1 angegebenen Merkmalen.

Ein derartiger Scheibenwischer ist in der DE 44 41 855 A1 zur Reinigung der Windschutzscheibe eines Kraftfahrzeugs vorgesehen, der zur Längsfixierung des Wischergummis an einem Krallenbügel einen Stift oder Bolzen aufweist, der in fluchtende Ausnehmungen in einem abgeflachten Bereich des Krallenbügels und des Wischergummis eingesteckt und in einer Ausnehmung in einem Federstab innerhalb des Wischergummis festgeklemmt ist. Nachdem der Federstab im Wischergummi elastisch nachgiebig eingebettet ist und der aus den Ausnehmungen vorstehende Bereich des Stiftes bzw. Bolzens kaum Kraftangriffsflächen aufweist, dürfte das Einbringen des Stiftes oder Bolzens in die Ausnehmungen und das Entfernen aus den Ausnehmungen erschwert sein, so dass ein Wechsel des Wischergummis entsprechend mühsam ist.

Der Erfindung liegt die Aufgabe zugrunde, einen Scheibenwischer mit den Merkmalen im Oberbegriff des Patentanspruches 1 anzugeben, der nach seiner Montage ausreichend festgehalten ist und einen einfacheren Wechsel des Wischergummis ermöglicht.

Diese Aufgabe ist durch die Merkmale im Patentanspruch 1 gelöst. Vorteilhafte Ausgestaltungen der Erfindung sind den Unteransprüchen entnehmbar.

Nachdem die Ausnehmung im Krallenbügel eine randseitig offene Schlitzausnehmung ist und entweder die Schlitzausnehmung elastisch aufzuweiten oder der Bolzen in seinem zur Schlitzausnehmung größeren Durchmesser elastisch zu verringern ist, kann der Wischergummi bei einem Wechsel in einfacher Weise von dem Krallenbügel abgenommen bzw. mit dem Krallenbügel verbunden werden. Hierzu ist lediglich der Wischergummi mit einer entsprechenden geringen Kraft in Längsrichtung der Führung des Krallenbügels zu beaufschlagen, damit der Stift oder Bolzen durch selbsttätige elastische Verringerung seines Durchmessers und/oder durch elastische Ausweitung der Schlitzausnehmung in die Schlitzausnehmung einzubringen oder durch Überwindung der kraftschlüssigen Verbindung des Stiftes oder Bolzens mit wenigstens einer Seitenwand der Schlitzausnehmung aus der Schlitzausnehmung zu entfernen ist. Der Stift oder Bolzen kann form- und/oder kraftschlüssig in der Schlitzausnehmung festgehalten sein. Vorzugsweise ist der Stift oder Bolzen an dem Wischergummi vormontiert. Bei der Montage oder Demontage des Wischergummis ist der Stift oder Bolzen nicht von dem Wischergummi zu lösen, so dass er dabei nicht verloren gehen kann.

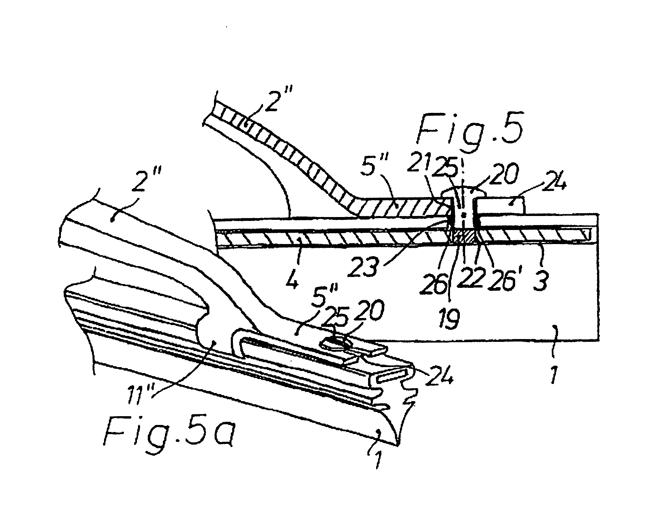

Ein Ausführungsbeispiel der Erfindung wird anhand einer Zeichnung näher erläutert. Es zeigen
- Figur 5: ein Ausführungsbeispiel mit einem Arretierelement, das durch einen elastischen, teilweise längsgeschlitzten Bolzen gebildet ist und
- Figur 5a: den in Figur 5 dargestellten Scheibenwischer in einer perspektivischen Ansicht.

Der in Figur 5 lediglich teilweise dargestellte Scheibenwischer mit einem austauschbaren Wischergummi 1 ist zur Reinigung der vorderen Windschutzscheibe eines Kraftfahrzeugs vorgesehen und weist an einem nicht dargestellten, hin und her schwenkbaren Wischarm ein Führungsbügelsystem zur Abstützung einer Wischerleiste mit einem Wischergummi 1 auf, wobei von dem Führungsbügelsystem lediglich ein Bereich eines Krallenbügels 2" dargestellt ist. Der Wischergummi 1 ist von mehreren Krallenbügeln gestützt, die jeweils zwei den Wischergummi 1 längsverstellbar stützende Krallen aufweisen, die mit seitlich gegenüberliegenden, nach innen gebogenen Krallennasen eine Längsführung für den Wischergummi 1 bilden. In dem Wischergummi 1 ist eine durchgehende Längsausnehmung 3 ausgebildet.

Bei dem in Figur 5 in einem Endbereich dargestellten Scheibenwischer ist zur Fixierung des Wischergummis 1 an dem Krallenbügel 2" ein Bolzen 19 verwendet, der bei der vorliegenden Ausführung ein Kopfteil 20 aufweist. Bei dieser Ausführung ist in einem abgeflachten bzw. verlängerten Bereich 5" des Krallenbügels 2" und in dem Wischergummi 1 sowie in einem in eine Längsausnehmung 3 im Wischergummi 1 eingesteckten Federstab 4 jeweils eine Durchtrittsöffnung 21, 22, 23 ausgebildet, die in der Gebrauchslage des Wischergummis 1 zueinander fluchten. In dem abgeflachten Bereich 5" des Krallenbügel 2" ist ein Längsschlitz 24 ausgebildet, der zu der Durchtrittsöffnung 21 im Krallenbügel 2" führt. Der Bolzen 19 ist in der Durchtrittsöffnung 22 im Federstab 4 festgeklemmt. Das Kopfteil 20 weist zur dem in der Figur oberen Rand des Wischergummis 1 einen Abstand auf, der wenigstens der Höhe des abgeflachten Bereiches 5" des Krallenbügels 2" entspricht. Beim Einstecken des Wischergummis 1 in die von dem Krallenbügel 2" gebildete Längsführung kann der Schaft des vorab an dem Wischergummi 1 befestigten Bolzens 19 in den Längsschlitz 24 des Krallenbügels 2" eintreten, der sich in Gebrauchslage des Wischergummis 1 in der Durchtrittsöffnung 21 befindet und im Zusammenwirken mit einem Umfangsbereich der Durchtrittsöffnung 21 den Einsteckweg des Wischergummis 1 begrenzt. Eine Rückverlagerung des Wischergummis 1 ist dadurch verhindert, dass der Bolzen 19 vom Kopfteil 20 her bis etwa zum Federstab 4 eine randseitig offene Schlitzausnehmung 25 aufweist und die Breite des Längsschlitzes 24 im Krallenbügel 2" etwas kleiner als der Durchmesser des Bolzens 19 ausgebildet ist, so dass ein elastisches Festklemmen des Bolzens 19 in dem Längsschlitz 24 bewirkt wird, wodurch eine Rückverlagerung des Wischergummis 1 verhindert ist. Der Bolzen 19 weist an radial gegenüberliegenden Umfangsbereichen radial vorstehende Klemmnasen 26, 26' auf, die axial zwischen dem Federstab 4 und dem Krallenbügel 2" in die Durchtrittsöffnung 23 im Wischergummi 1 eingreifen und dadurch den Bolzen 19 stützen.

Der in Figur 5 dargestellte Endbereich eines Scheibenwischers ist in Figur 5a in einer perspektivischen Ansicht dargestellt, der weitere Einzelheiten entnehmbar sind.

## Patentansprüche

1. Scheibenwischer mit austauschbarem Wischergummi (1) mit einem den Wischergummi (1) längsverstellbar stützenden Krallenbügel (2") und einem in eine Längsausnehmung (3) des Wischergummis (1) einsteckbaren Federstab (4) , wobei der Krallenbügel (2") einen Bereich (5") aufweist, in dem eine Ausnehmung (24) ausgebildet ist, die mit einer Einstecköffnung (22, 23) in dem Wischergummi (1) und in dem Federstab (4) fluchtet, in die zur Längsfixierung des Wischergummis (1) an dem Krallenbügel (2") ein Bolzen (19) eingebracht ist, **dadurch gekennzeichnet, dass** die Ausnehmung im Krallenbügel (2") eine randseitig offene Schlitzausnehmung (24) ist, die eine zum Durchmesser des Bolzens (19) etwas geringere Breite aufweist und der Bolzen (19) entweder durch elastisches Aufweiten der Schlitzausnehmung (24) und/oder durch elastische Verringerung seines Durchmessers in die Schlitzausnehmung (24) einzubringen ist.

2. Scheibenwischer nach Anspruch 1, **dadurch gekennzeichnet, dass** der Bolzen (19) an seinem aus dem Federstab (4) hervorstehenden Bereich einen Längsschlitz (25) aufweist.

3. Scheibenwischer nach Anspruch 1 oder 2, **dadurch gekennzeichnet, dass** der Bolzen (19) an einem Umfangsbereich eine radial vorstehende Klemmnase (26, 26') aufweist, die axial zwischen dem Federstab (4) und dem Krallenbügel (2'') in einen Umfangsbereich der Durchtrittsöffnung (21) des Wischergummis (1) eingreift.

4. Scheibenwischer nach einem der Ansprüche 1 bis 3, **dadurch gekennzeichnet, dass** der Federstab (4) bereichsweise gegenüber der Breite oder Höhe der Längsausnehmung (3) größer ausgebildet ist und dadurch beim Einstecken des Federstabes (4) in die Längsausnehmung (3) einen Bereich der Längsausnehmung (3) und damit des Wischergummis (1) elastisch aufweitet, wodurch der Federstab (4) in der Längsausnehmung (3) festgehalten ist.

## Claims

1. A windscreen wiper with a replaceable wiper rubber (1), comprising a claw arc (2") supporting the wiper rubber (1) in a longitudinally adjustable manner and a spring rod (4) which can be inserted into a longitudinal recess (3) of the wiper rubber (1), the claw arc (2") having a region (5") in which a recess (24) is formed which aligns with an insertion aperture (22, 23) in the wiper rubber (1) and in the spring rod (4), into which aperture a pin (19) is introduced for longitudinal fixing of the wiper rubber (1) on the claw arc (2"), **characterised in that** the recess in the claw arc (2") is a slot recess (24) which is open at the edge and has a somewhat smaller width compared to the diameter of the pin (19) and the pin (19) is to be introduced into the slot recess (24) either by elastic expansion of the slot recess (24) and/or by elastic reduction in its diameter.

2. A windscreen wiper according to claim 1, **characterised in that** the pin (19) has a longitudinal slot (25) on its region projecting from the spring rod (4).

3. A windscreen wiper according to claim 1 or claim 2, **characterised in that** the pin (19), on its peripheral region, has a radially projecting clamping nose (26, 26') which engages in a peripheral region of the through-aperture (21) of the wiper rubber (1) axially between the spring rod (4) and the claw arc (2").

4. A windscreen wiper according to any one of claims 1 to 3, **characterised in that** the spring rod (4) is larger in design in regions compared to the width or the height of the longitudinal recess (3) and therefore, on insertion of the spring rod (4) into the longitudinal recess (3), elastically expands a region of the longitudinal recess (3) and therefore of the wiper rubber (1), so the spring rod (4) is fixed in the longitudinal recess (3).

## Revendications

1. Essuie-glace muni d'une lame en caoutchouc (1) remplaçable, muni d'un étrier à griffes (2") qui soutient la lame en caoutchouc (1) de façon à ce qu'elle puisse se déplacer longitudinalement et d'une barre élastique (4) qui peut être engagée dans une cavité allongée (3) de la lame en caoutchouc (1), l'étrier à griffes (2") présentant une zone (5") dans laquelle est formée une cavité (24), alignée avec une ouverture d'insertion (22, 23) située dans la lame en caoutchouc (1) et dans la barre élastique (4), dans laquelle est engagé un axe (19) destiné à fixer longitudinalement la lame en caoutchouc (1) sur l'étrier à griffes (2"),
**caractérisé en ce que**
la cavité située dans l'étrier à griffes (2") est une cavité en fente (24), ouverte sur le bord, dont la largeur est légèrement plus petite que le diamètre de l'axe (19) et l'axe (19) peut être engagé dans la cavité en fente (24) du fait que la cavité en fente (24) s'élargit élastiquement et/ou que son diamètre se réduit élastiquement.

2. Essuie-glace selon la revendication 1,
**caractérisé en ce que**
l'axe (19) présente une fente allongée (25) sur sa zone qui dépasse de la barre élastique (4).

3. Essuie-glace selon la revendication 1 ou 2,
**caractérisé en ce que**
sur sa zone périphérique l'axe (19) présente un bec de serrage (26, 26") en saillie radiale qui, axialement entre la barre élastique (4) et l'étrier à griffes (2"), a prise dans une zone périphérique de l'ouverture de passage (21) de la lame en caoutchouc (1).

4. Essuie-glace selon l'une des revendications 1 à 3,
**caractérisé en ce que**
la barre élastique (4) est par endroits plus grande que la largeur ou que la hauteur de la cavité allongée (3) et par conséquent une zone de la cavité allongée (3), et donc de la lame en caoutchouc (1), s'élargit élastiquement lorsqu'on introduit la barre élastique (4) dans la cavité allongée (3), ce qui permet que la barre élastique (4) soit maintenue dans la cavité allongée (3).
